# EUROPÄISCHE PATENTSCHRIFT

(11) **EP 1 051 273 B1**
(45) Veröffentlichungstag und Bekanntmachung des Hinweises auf die Patenterteilung: **04.10.2001**
(21) Anmeldenummer: 98964397.8
(22) Anmeldetag: 12.11.1998
(51) Int. Cl.: B22D 19/00

(54) **VERFAHREN ZUM HERSTELLEN EINES ZYLINDERKOPFES EINER BRENNKRAFTMASCHINE**
METHODS FOR PRODUCING A CYLINDER HEAD OF AN INTERNAL COMBUSTION ENGINE
PROCEDE POUR PRODUIRE UNE CULASSE DE MOTEUR A COMBUSTION INTERNE

(30) Priorität: 31.01.1998 DE 19803867
(43) Veröffentlichungstag der Anmeldung: 15.11.2000
(73) Patentinhaber: Volkswagen Aktiengesellschaft, 38436 Wolfsburg (DE)
(72) Erfinder: SPIEGEL, Leo, D-38518 Gifhorn (DE); LIPPERT, Eduard, D-38547 Calberlah (DE)
(86) Internationale Anmeldenummer: EP9807254
(87) Internationale Veröffentlichungsnummer: WO9938629

(56) Entgegenhaltungen:
- EP-A- 0 899 042
- DE-A- 3 721 021
- DE-B- 2 035 939
- US-A- 4 543 931
- MAX F. HOMFELD: "Vehicle Emissions - Part II (Selected SAE Papers, 1963-1966" 1966 , SOCIETY OF AUTOMOTIVE ENGINEERS, INC. , NEW YORK, US XP002098705 in der Anmeldung erwähnt siehe Seite 210 - Seite 211; Abbildung C
- PATENT ABSTRACTS OF JAPAN vol. 011, no. 238 (M-613), 5. August 1987 & JP 62 050064 A (MITSUBISHI MOTORS CORP), 4. März 1987

## Beschreibung

Die Erfindung betrifft ein Verfahren zum Herstellen eines Zylinderkopfes einer Brennkraftmaschine mit Sandkernen zum Ausbilden eines Einlaßkanals zur Verbrennungsluftzuführung in die Brennkraftmaschine, insbesondere für ein Kraftfahrzeug, wobei in wenigstens einem Gasströmungskanal ein Trennblech angeordnet ist, welches in dem Sandkern des entsprechenden mit einem Trennblech zu versehenden Gasströmungskanals angeordnet ist, gemäß dem Oberbegriff des Anspruchs 1. Die Erfindung betrifft ferner ein Trennblech, gemäß dem Oberbegriff des Anspruchs 4.

Zum Beeinflussen der Strömungsdynamik einer Gasströmung in einem Einlaßkanal für Verbrennungsluft in einem Zylinderkopf für eine Brennkraftmaschine ist es bekannt, ein Trennblech vorzusehen. Dieses muß jedoch unabhängig von der Herstellung des Zylinderkopfes maßgenau gefertigt und anschließend nachträglich in einen entsprechenden Einlaßkanal eingesetzt werden. Hierbei ergibt sich das Problem, daß das Trennblech einerseits sehr dünn sein soll, um keinen großen Strömungswiderstand im Strömungsquerschnitt des Einlaßkanals zu bewirken. Andererseits kann dieser Forderung jedoch nicht genügend entsprochen werde, da durch das nachträgliche Einsetzen und befestigen im Einlaßkanal eine hohe Eigenstabilität des Trennbleches erforderlich ist, was einem Vermindern einer Materialstärke des Trennbleches eine entsprechende untere Grenze setzt.

Aus dem Artikel "Vehide Emissions - Part II", Selected SAE Papers, 1963-1966, Society of Automotive Engineers, Inc., New York, New York 10017, ist es ferner bekannt, in einem Vergaser mit zwei Drosselklappen einen Primärkanal von einem Sekundärkanal mittels eines Metallbleches zu trennen, so daß ein Wärmeübergang zwischen den Kanälen erfolgt.

Aus PATENT ABSTRACTS OF JAPAN vol. 011, no. 238 (M-613), 5. August 1987, JP 62 050064 A ist ein Haupt- und ein Hilfseinlaß in einem Zylinderkopf bekannt, welche zum Ausbilden eines variablen Wirbeleinlasses mittels einer Trennplatte voneinander abgetrennt sind. Diese Trennplatte wird in einem Sandkern angeordnet.

Der vorliegenden Erfindung liegt die Aufgabe zugrunde, ein Verfahren der obengenannten Art zur Verfügung zu stellen, wobei die obengenannten Nachteile überwunden werden und ein Zylinderkopf mit einem sehr dünnen Trennblech in Gasströmungskanälen erzielt wird.

Diese Aufgabe wird erfindungsgemäß durch ein Verfahren der o.g. Art mit den in Anspruch 1 gekennzeichneten Merkmalen und durch ein Trennblech der o.g. Art mit den in Anspruch 4 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß vor dem Gießverfahren das Trennblech als Tumble-Blech mit seitlichen Fahnen und mit einem Längsschlitz, welcher das Tumble-Blech am stromabseitigen Ende in zwei Schenkel teilt, ausgebildet und in dem Sandkern derart angeordnet wird, daß die seitlichen Fahnen aus dem Sandkern herausragen und das Tumble-Blech beabstandet von Enden des Einlaßkanals angeordnet ist.

Dies hat den Vorteil, daß der den Einlaßkanal bildende Kern das Tumble-Blech direkt aufnimmt und dieses somit während des Gießvorgangs nicht als separates Bauteil zu handhaben ist. Somit wird auf einfache Art ein Einlaßkanal mit Tumbleströmung erzielt. Für eine feste Verbindung zwischen Trennblech und den im Gießverfahren gebildeten Wandungen des entsprechenden Gasströmungskanals wird das Trennblech mit seitlichen Montageaugen ausgebildet, welche aus dem Sandkern herausragen.

Als Gießverfahren wird bevorzugt ein Kokillenguß angewendet, wobei hier die einzelnen Sandkerne in einem Stahlkasten eingesetzt werden, wobei sich die Kerne nach dem Gießvorgang auflösen. Verbleiben tut anschließend das Tumble-Blech, welches somit in den Einlaßkanal integriert ist.

Zweckmäßigerweise ist der Kokillenguß ein Grauguß oder ein Aluguß, alternativ auch ein Magnesiumguß.

Ein Trennblech ist erfindungsgemäß als Tumble-Blech ausgebildet und weist seitliche Montageohren sowie einen zwei Schenkel ausbildenden Längsschlitz auf.

Die hat den Vorteil, daß das Tumble-Blech in einen Sandkern für einen Gasströmungskanal für ein Kokillengußverfahren integrierbar ist, so daß das Trennblech gleichzeitig mit der Herstellung des Zylinderkopfes in dem entsprechenden Gasströmungskanal ausgebildet wird und mittels der Montageohren fest in Wandungen des Gasströmungskanals verankert ist. Zur Strömungsbeeinflussung an einer Mündungsstelle von zwei Einlaßkanälen weist das Trennblech an einem Ende einen zwei Schenkel ausbildenden Längsschlitz auf, wobei die beiden Schenkel in jeweils einen Einlaßkanal ragen.

Zum Erzielen eines geringen Strömungswiderstandes durch das Tumble-Blech weist dieses in vorteilhafter Weise eine Materialstärke von 0,6 bis 1,5 mm, vorzugsweise von 0,6 bis 1,0 mm, insbesondere von 0,8 mm oder weniger auf.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: einen Einlaßkanal eines Zylinderkopfes einer Brennkraftmaschine im Querschnitt,
- Fig. 2: in einer Ansicht in Richtung Pfeil A von Fig. 1,
- Fig. 3: eine bevorzugte Ausführungsform eines erfindungsgemäßen Trennbleches in Aufsicht und
- Fig. 4: einen mit der bevorzugten Ausführungsform eines erfindungsgemäßen Trennbleches von Fig. 3 versehenen Sandkern für einen Kokillenguß in Aufsicht.

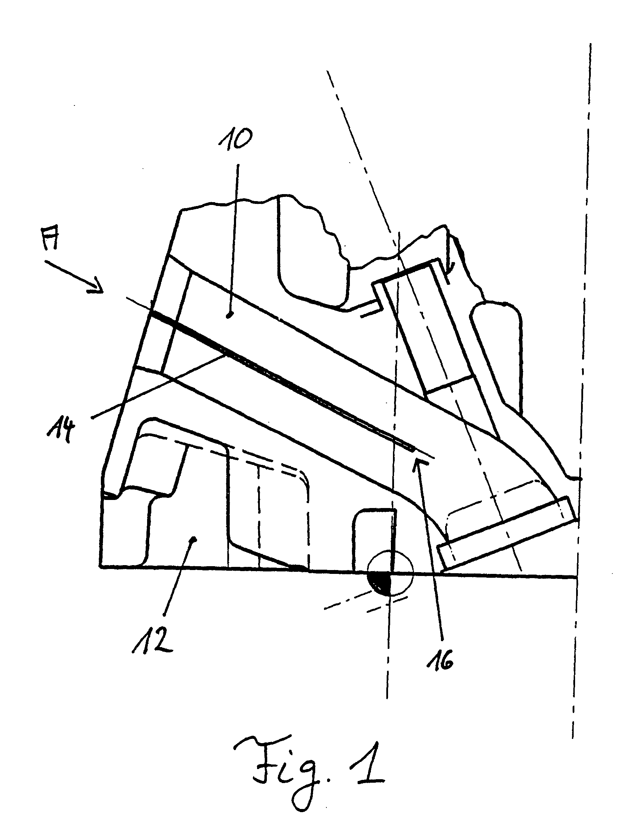

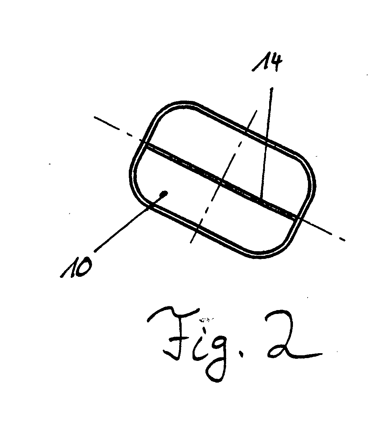

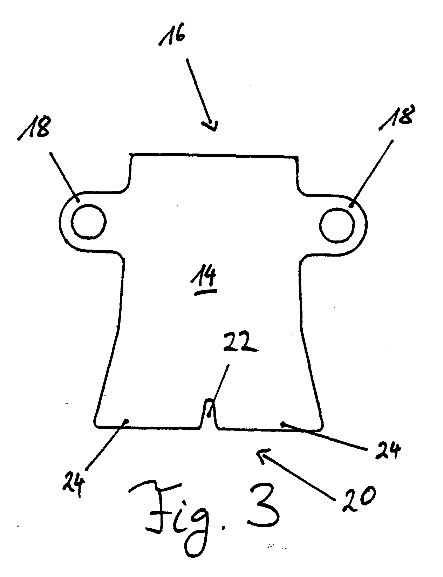

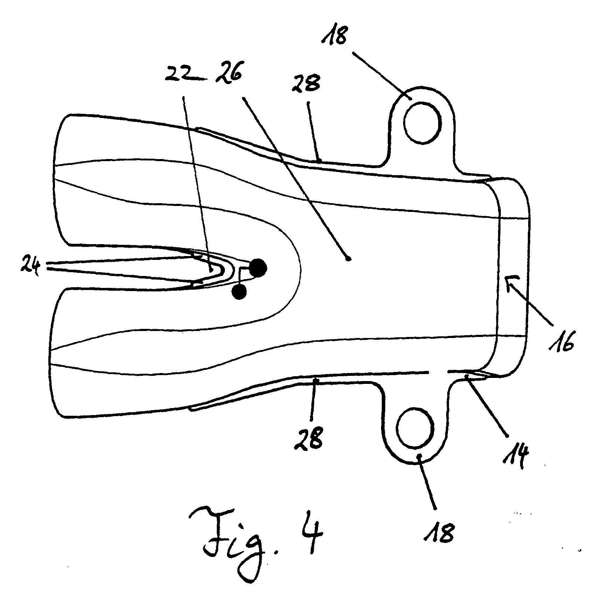

Fig. 1 zeigt einen Einlaßkanal 10 in einem Zylinderkopf 12 einer ansonsten nicht näher dargestellten Brennkraftmaschine. In dem Einlaßkanal 10 ist ein Trennblech in Form eines Tumble-Bleches 14 angeordnet. Das Tumble-Blech 14 teilt einen Gasstrom im Einlaßkanal 10 in zwei Teilströme, die sich an einem stromabseitigen Ende 16 des Tumble-Bleches wieder derart vereinigen.

Fig. 2 zeigt in einer Ansicht in Richtung A von Fig. 1 die Teilung des Einlaßkanals 10 durch das Tumble-Blech 14.

Fig. 3 veranschaulicht eine bevorzugte Ausführungsform eines erfindungsgemäßen Trennbleches 14. Dieses wird vor dem Gießen des Zylinderkopfes 12 hergestellt und weist zwei zunächst als Montageohren dienende Fahnen 18 auf. An einem stromabseitigen Ende 20 des Trennbleches 14 ist ein Längsschlitz 22 ausgebildet, welcher das Trennblech 14 an diesem Ende in zwei Schenkel 24 teilt. Erfindungsgemäß wird dieses Trennblech 14 in einen Sandkern 26 für einen Kokillenguß des Zylinderkopfes 12 eingebacken, wobei dieser verlorene Sandkem 26 beim Gußverfahren den Einlaßkanal 10 ausbildet.

Ein derartiger Sandkern 26 mit eingebackenem Trennblech 14 ist in Fig. 4 dargestellt. Die Fahnen 18 ragen aus dem Sandkern 26 heraus, so daß dieses in eine beim Gießvorgang gebildete Wandung des Einlaßkanals 10 ragen und für eine feste Verankerung des Trennbleches 14 im Einlaßkanal 10 sorgen. Zusätzlich ist die Anordnung aus Sandkern 26 und Trennblech 14 derart getroffen, daß auch ein Teil eines Seitenbereiches 28 des Trennbleches 14 aus dem Sandkern 26 seitlich herausragt. Dadurch ist sichergestellt, daß unabhängig von Fertigungstoleranzen der Einlaßkanal 10 in jedem Fall in zwei im Bereich des Trennbleches gasdicht voneinander getrennte Kanäle geteilt wird.

Ferner bildet der Sandkem 26, wie unmittelbar aus Fig. 4 ersichtlich, eine Mündungsstelle für zwei Gaskanäle aus. Bis in diese Mündungstelle hinein ist das Trennblech 14 angeordnet, wobei jeweils ein Schenkel 24 (Fig. 3) in einen einmündenden Kanal ragt.

Die obigen Erläuterungen bezüglich des Einlaßkanals 10 sind nur beispielhaft. Das erfindungsgemäße Verfahren mit dem erfindungsgemäßen Trennblech 14 ist an jedem Gaswechselkanal im Zylinderkopf 12 anwendbar, also beispielsweise auch an einem Abgaskanal, welcher Abgas aus dem Zylinderkopf heraus führt oder einem Abgasrückführungskanal, welcher Abgas in einen Ansaugluftstrom zurückführt.

Das Trennblech 14 kann in Abweichung von der planen Ausbildung, beispielsweise gemäß Figur 1, ebenso beliegig gekrümmt ausgeführt sein.
Ebenso können an dem Trennblech 14 bereits bei dessen Herstellung bzw. vor dem Eingießen Einrichtungen zur Aufnahme einer Absperreinrichtung für einen der Teilkanäle des Einlaßkanales 10 vorgesehen sein.

## Patentansprüche

1. Verfahren zum Herstellen eines Zylinderkopfes einer Brennkraftmaschine mit Sandkernen zum Ausbilden eines Einlaßkanals zur Verbrennungsluftzuführung in die Brennkraftmaschine, insbesondere für ein Kraftfahrzeug, wobei in wenigstens einem Gasströmungskanal ein Trennblech angeordnet ist, welches in dem Sandkern des entsprechenden mit einem Trennblech zu versehenden Gasströmungskanals angeordnet ist,
**dadurch gekennzeichnet, daß**
vor dem Gießverfahren das Trennblech als Tumble-Blech mit seitlichen Fahnen und mit einem Längsschlitz, welcher das Tumble-Blech am stromabseitigen Ende in zwei Schenkel teilt, ausgebildet und in dem Sandkern derart angeordnet wird, **daß** die seitlichen Fahnen aus dem Sandkern herausragen und das Tumble-Blech beabstandet von Enden des Einlaßkanals angeordnet ist.

2. Verfahren nach Anspruch 1,
**dadurch gekennzeichnet, daß**
als Gießverfahren ein Kokillenguß angewendet wird.

3. Verfahren nach Anspruch 2,
**dadurch gekennzeichnet, daß**
der Kokillenguß ein Grauguß, Magnesiumguß oder ein Aluminiumguß ist.

4. Trennblech (14) für einen Gasströmungskanal (10) eines Zylinderkopfes (12) einer Brennkraftmaschine, insbesondere für ein Kraftfahrzeug,
**dadurch gekennzeichnet, daß**
das Trennblech (14) als Tumble-Blech ausgebildet ist und seitliche Montageohren (18) sowie einen zwei Schenkel (24) ausbildenden Längsschlitz (22) aufweist.

5. Trennblech (14) nach Anspruch 6 oder 7,
**dadurch gekennzeichnet, daß**
das Trennblech (14) eine Materialstärke von 0,5 bis 1,5 mm, vorzugsweise von 0,6 bis 1, mm, insbesondere 0,8 mm aufweist.

## Claims

1. Method of producing a cylinder head of an internal combustion engine with sand cores for the purpose of forming an inlet channel for the supply of combustion air into the internal combustion engine, in particular for a motor vehicle, wherein a metal separating sheet is disposed in at least one gas flow channel and is disposed in the sand core of the corresponding gas flow channel which is to be provided with a metal separating sheet, **characterised in that** prior to the casting process, the metal separating sheet is formed as a tumble sheet having side-lugs and a longitudinal slit which divides the tumble sheet at the downstream end into two limbs and said metal separating sheet is disposed in the sand core in such a manner that the side lugs protrude out of the sand core and the tumble sheet is disposed at a spaced interval from ends of the inlet channel.

2. Method according to claim 1, **characterised in that** a chilled casting is used for the casting process.

3. Method according to claim 2, **characterised in that** the chilled casting is grey cast iron, cast magnesium or cast aluminium.

4. Metal separating sheet (14) for a gas flow channel (10) of a cylinder head (12) of an internal combustion engine, in particular for a motor vehicle, **characterised in that** the metal separating sheet (14) is formed as a tumble sheet and comprises side mounting lugs (18) and a longitudinal slit (22) which forms two limbs (24).

5. Metal separating sheet (14) according to claim 6 or 7, **characterised in that** the metal separating sheet (14) comprises a material thickness of 0.5 to 1.5 mm, preferably 0.6 to 1 mm, in particular 0.8 mm.

## Revendications

1. Procédé de fabrication d'une culasse pour un moteur à combustion interne, utilisant des noyaux de sable pour former un canal d'admission assurant l'acheminement d'air de combustion vers le moteur à combustion interne, en particulier pour un véhicule automobile, où une tôle séparatrice est agencée dans au moins un canal d'écoulement des gaz, tôle qui est placée dans le noyau de sable du canal correspondant d'écoulement des gaz à équiper d'une tôle séparatrice,
**caractérisé en ce qu'**avant l'opération de moulage, la tôle séparatrice est réalisée sous forme d'une tôle à effet *tumble* comportant des pattes latérales et une fente longitudinale qui divise la tôle à effet *tumble*, à l'extrémité aval de celle-ci, en deux branches, et **en ce que** le noyau de sable est disposé de manière telle que les pattes latérales fassent saillie à l'extérieur du noyau de sable, et que la tôle à effet *tumble* soit positionnée à distance des extrémités du canal d'admission.

2. Procédé selon la revendication 1, **caractérisé en ce que** le procédé de moulage mis en oeuvre est un moulage en coquille.

3. Procédé selon la revendication 2, **caractérisé en ce que** le moulage en coquille est un moulage de fonte grise, de fonte de magnésium ou de fonte d'aluminium.

4. Tôle séparatrice (14) pour un canal (10) d'écoulement des gaz d'une culasse (12) d'un moteur à combustion interne, en particulier pour une automobile, **caractérisée en ce que** la tôle séparatrice (14) est réalisée sous forme d'une tôle à effet *tumble* et comporte des oreilles latérales (18) de montage ainsi qu'une fente longitudinale (22) définissant deux branches (24).

5. Tôle séparatrice (14) selon la revendication 4, **caractérisée en ce que** la tôle séparatrice (14) présente une épaisseur de matière de 0,5 à 1,5 mm, de préférence de 0,6 à 1,0 mm, et notamment une épaisseur de 0,8 mm.
